(19) **Europäisches Patentamt**

**European Patent Office**

**Office européen des brevets**

(11) **EP 0 592 616 B1**

(12) **EUROPEAN PATENT SPECIFICATION**

(45) Date of publication and mention
of the grant of the patent:
**12.11.1997 Bulletin 1997/46**

(51) Int Cl.[6]: **G03C 5/17**, C09K 11/86,
G21K 4/00

(21) Application number: **93900045.1**

(22) Date of filing: **02.07.1992**

(86) International application number:
**PCT/US92/05442**

(87) International publication number:
**WO 93/01521 (21.01.1993 Gazette 1993/03)**

(54) **ULTRAVIOLET FILM/SCREEN COMBINATIONS FOR IMPROVED RADIOLOGICAL EVALUATIONS**

KOMBINATION VON FILM UND ULTRAVIOLETT EMITTIERENDEM SCHIRM FÜR VERBESSERTE RADIOLOGISCHE AUSWERTUNGEN

STRUCTURE COMBINEE DE FILM ET D'ECRAN EMETTANT DES ULTRAVIOLETS POUR EFFECTUER DES BILANS RADIOLOGIQUES AMELIORES

(84) Designated Contracting States:
**BE DE FR GB IT**

(30) Priority: **03.07.1991 US 725154**

(43) Date of publication of application:
**20.04.1994 Bulletin 1994/16**

(73) Proprietor: **Sterling Diagnostic Imaging, Inc.**
**Glasgow, DE 19702 (US)**

(72) Inventors:
• **BEUTEL, Jacob**
**Hockessin, DE 19707 (US)**

• **ISSLER, Sandra, Laurine**
**Wilmington, DE 19810 (US)**

(74) Representative:
**von Kreisler, Alek, Dipl.-Chem. et al**
**Patentanwälte,**
**von Kreisler-Selting-Werner,**
**Bahnhofsvorplatz 1 (Deichmannhaus)**
**50667 Köln (DE)**

(56) References cited:
**EP-A- 0 234 532** | **US-A- 4 801 522**
**US-A- 4 804 621** | **US-A- 4 959 174**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

This invention relates to the field of radiology and more specifically to a photographic film and intensifying X-ray screen systems for use therein. Still more specifically, this invention relates to screens which exclusively emit ultraviolet light, in combination with suitable films, where such combinations can be used to obtain significantly higher radiological image quality at equivalent radiation dose or conversely similar radiological image quality at a significantly reduced radiation dose.

BACKGROUND OF THE INVENTION

The use of an X-ray intensifying screen to increase the ability of a photographic film to capture an image generated by X-ray exposure is well-known in the prior art. These so-called intensifying screens have gained great popularity in modern radiology practice since they greatly increase system speed and thus lower the dosage of harmful X-rays which must impinge on a patient in order to generate the appropriate image and the resulting information on the film. With the advent of improved screens based on yttrium tantalate, for example, these modern film/screen systems have become extremely fast. One drawback, however, is that as the speed of the system is increased in an on-going effort to reduce patient dosage, the image quality obtainable thereon is also reduced by so-called "noise" and by a decrease in image resolution. Thus, there is a pressing need to have systems that will produce good image quality in film images associated therewith.

Although ultraviolet (herein "UV") emitting phosphors are well-known (e.g. from EP-A-0234532), they have not generally been used as X-ray phosphors commercially by the medical profession. These UV emitting phosphors, when excited by X-ray radiation, will generally emit light in the range of 300-400 nm which is in the UV. However, when UV emitting phosphors are used with conventional silver halide films, they produce a maximum optical density (Dmax) which is significantly lower than that produced on exposure to visible light (greater than 400 nm) and this loss of Dmax leads to a significant distortion of the film's response curve observed as a decrease in the film's contrast behavior.

Additionally, most prior art UV emitting phosphors have some emission in the visible range of the spectrum. Phosphors which emit exclusively below 390 nm have not found use in the prior art.

Most of the commonly obtainable film systems are based on gelatino silver halide elements and these are usually double-side coated in order to increase the coating weight of the system without introducing curl and other effects. With double-side coated X-ray film elements it is conventional to employ two intensifying screens, one on each side of the above referenced film element. This film/screen structure leads to unsharpness due to cross-over effects during exposure (known as print-through). Thus, there is a need to reduce print-through so as to obtain better image quality at a given speed (X-ray dose) or to trade the image quality advantage obtained by reducing print-through for a lower X-ray exposure dose.

SUMMARY OF THE INVENTION

It is an object of this invention to prepare a film/screen system which has good speed and sensitometry including adequate top density, excellent image quality and reduced print-through. These and yet other properties are achieved by the radiographic system of the present invention. Thus it is provided a radiographic system comprising a pair of X-ray intensifying screens in contact with a double-side coated silver halide element, said silver halide comprising silver halide grains wherein at least 50 % of said grains are tabular silver halide grains with a thickness of less than 0.5 $\mu$m and an average aspect ratio of greater than 2:1, and wherein said X-ray intensifying screens comprise a support bearing a phosphor layer thereon, said layer comprising phosphor dispersed in a binder with the proviso that said phosphor, when absorbing X-radiation has a peak emission between 300 and 390 nm, does not emit more than 20 % of its light below 300 nm or above 390 nm, and said binder absorbs less than 10 % of any ultra-violet light emitted therefrom; and wherein said double-side coated silver halide element comprises a Dmax(vis) defined as the maximum density obtainable on said double-side coated silver halide element when exposed to visible light and a Dmax(UV) defined as the maximum density obtainable on said double-side coated silver halide element when exposed to UV light and

$$\frac{\text{Dmax (vis) - Dmax (UV)}}{\text{Dmax (vis)}} = \text{to or} < \text{than } 0.10.$$

Moreover, it is provided
a radiographic system comprising a pair of X-ray intensifying screens in contact with a double-side coated silver halide element, said silver halide comprising silver halide grains wherein said grains are consisting of spherical silver chloride grains wherein the silver chloride content is at least 50 mol % and wherein said X-ray intensifying screens comprise a support bearing a phosphor layer thereon, said layer comprising phosphor dispersed in a binder with the proviso that said phosphor, when absorbing X-radiation, has a peak emission between 300 and 390 nm, does not emit more than 20 % of its light below 300 nm or above 390 nm, and wherein said phosphor is selected from yttrium tantalate activated with gadolinium, and lanthanum oxybromide activated with gadolinium and said binder absorbs less than 10 % of any ultra-violet light emitted therefrom; and wherein said double-side coated silver halide element comprises a Dmax(vis) defined as the maximum density obtainable on said double-side coated silver halide element when exposed to visible light and a Dmax(UV) defined as the maximum density obtainable on said double-side coated silver halide element when exposed to UV light and

$$\frac{Dmax(vis) - Dmax(UV)}{Dmax(vis)} = \text{to or} < \text{than } 0.10.$$

## BRIEF DESCRIPTION OF THE DRAWING

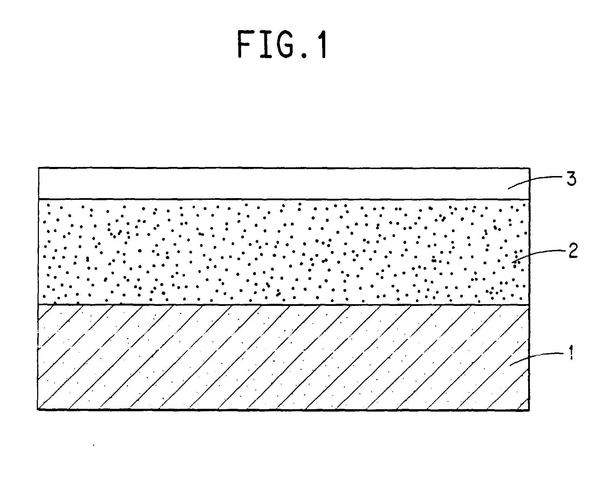

FIG. 1 is a drawing of a typical X-ray intensifying screen element which is produced following the procedures described herein.

## DETAILS OF THE INVENTION

There are many well-known X-ray phosphors which emit in the ultraviolet (UV) when exposed to X-radiation.

Although these phosphors may also produce improved image quality, it is also well-known that X-ray intensifying screens prepared from these UV emitting phosphors, produce very low contrast and low Dmax on conventional silver halide elements used therewith. This change in the film's response curve renders the resulting image less usable because it lowers contrast without increasing the dynamic range of the image recording system. Typical of these UV emitting phosphors are, for example $YTaO_4$ either unactivated or activated with gadolinium, bismuth, lead, cerium or mixtures of these activators; LaOBr activated with gadolinium or gadolinium and thulium; and $La_2O_2S$ activated with gadolinium. Most of these phosphors emit mainly in the UV, e.g., 300 to 390 nm, although some small amount of light, e.g., up to 20% and preferably less than 10%, may also be emitted below 300 and above 390 nm. For the purpose of this invention, UV emitting phosphors will emit in the range of 300 to 390 nm and preferably in the range of 310 to 360 nm. For the phosphors of this invention to be applicable in practical X-ray imaging systems, the conversion efficiency of the phosphor, i.e., the efficiency with which the energy carried by an X-ray quantum absorbed by this phosphor is then converted to light photons emitted by the phosphor, should be higher than 5%.

These phosphors may be prepared as is well-known in the prior art and then mixed with a suitable binder before coating on a suitable support. Once prepared in this manner, this element is conventionally known as an X-ray intensifying screen and is eminently suitable for diagnostic X-ray imaging applications. There are a host of commercially available X-ray intensifying phosphors that do not function within the metes and bounds of this invention. These include but are not limited to the following:

| Phosphor | Peak Emission (nm) | Remarks |
|---|---|---|
| Calcium Tungstate | 410 | Not a UV phosphor |
| $YTaO_4$:Nb | 400 | " " " " |
| $Gd_2O_2S$:Tb | 520 | " " " " |
| $YTaO_4$:Tm | 335 | More than 20% in the visible |
| BaFX:Eu (X=halide) | 380 " | " " " " " |
| LaOBr:Tm | 370 & 470 " | " " " " " |

Conventionally, a screen of the type encompassed by the phosphors described in this invention will comprise a support, an intensifying phosphor layer, and a topcoat or protective layer therefor. A reflective layer, such as a whitener, e.g., $TiO_2$ dispersed in a suitable binder, may also be added to the screen structure. Commonly, this reflective layer is interposed between the phosphor layer and the support, or, alternatively, the whitener may be dispersed directly in the support. The reflective layer generally increases the light output of the intensifying screen during use. The protective layer is important to protect the phosphor layer against mechanical damage. The protective layer should generally also be UV transparent so that the intensity of UV light from the phosphor is not decreased. Those protective layers that are known to absorb a great deal of UV light, e.g., polyethylene terephthalate films, are not particularly useful within this invention. In operation, the intensifying screen absorbs X-rays that impinge thereon and emits energy having a wavelength that is readily captured by the photographic silver halide X-ray film associated therewith. Effective X-ray intensifying phosphors based on yttrium, gadolinium or lutetium tantalate are known. These particular phosphors, with the monoclinic M' phase, are particularly effective in capturing X-rays. Some of these tantalate phosphors are also efficient emitters of UV light and are particularly preferred within the metes and bounds of this invention. They are generally prepared according to the methods of Brixner, U.S. Pat. No. 4,225,653.

These phosphors, which cannot emit more than 20% of their light below 300 nm or above 390 nm, are generally manufactured by mixing the various oxides and firing in a suitable flux at elevated temperatures. After firing, pulverizing and washing, the phosphor is mixed with a suitable binder in the presence of a suitable solvent therefor and coated on a support, with the proviso that said binder can absorb less than 10% of any UV light emitted from said phosphor, a so-called "transparent" binder. All of these steps are described in the aforementioned Brixner reference and all are well-known in the prior art. A protective topcoat may also be applied over this phosphor coating, in fact it is so preferred.

In the radiological process, it is conventional to employ a photosensitive silver halide film element with the above described X-ray intensifying screens. Since the coating weights of these elements are usually high, it is conventional to apply the silver halide coating to both sides of a support, e.g., dimensionally stable polyethylene terephthalate film. In the practice of this invention, the silver halide element will be comprised of silver chloride grains such as spherical or cubic as defined above. These elements are also well-known in the prior art and the preparation of grains of this type is also known and taught therein. The grains are generally made into an emulsion using a binder such as gelatin, and are sensitized with gold and sulfur, for example. Other adjuvants such as antifoggants, wetting and coating aides, dyes and hardeners may also be present if necessary. The emulsion is double-side coated on the support and a thin, hardened gelatin overcoat is usually applied over each of the emulsion layers to provide protection thereto. Since the emulsions useful within the ambit of this invention are generally UV sensitive in and of themselves, it may not be required to add any kind of sensitizing or desensitizing dye thereto. However, if required, a small amount of a sensitizing dye might advantageously be added. Additionally, it is also conventional to add a sensitizing dye to tabular emulsions in order to increase their ability to respond to light. To further distinguish the photographic elements useful within this invention, i.e., photographic emulsions containing tabular AgIBr or AgBrCl crystals, we can say that when these emulsions are exposed to the UV light which emanates from the screens of this invention, the maximum optical density which they can achieve, i.e., Dmax, will not decrease by more than 10% compared with the Dmax obtained when the same system is exposed to visible light having a wavelength greater than 400 nm. This can be represented by the formula:

$$\frac{\text{Dmax (vis) - Dmax (UV)}}{\text{Dmax (vis)}} = \text{to or} < \text{than } 0.10$$

Tabular grain silver halide products are well-known in the prior art and present the user with some considerable advantages over conventional grain products, e.g., semi-spheroidal grains. The tabular products can usually be coated at a much thinner coating weight without loss of covering power. They can be hardened with smaller amounts of conventional hardeners, presenting quite a significant advantage over the conventional grains. Tabular chloride emulsions are also well-known and are described by Maskasky in U.S. 4,400,463, 8/23/83 and also by Wey, U.S. 4,399,205. Some other references which describe the manufacture and use of tabular grain elements are Dickerson, U.S. 4,414,304; Wilgus et al., U.S. 4,434,226; Kofron et al., U.S. 4,439,520; and Tufano and Chan, U.S. 4,804,621.

In a particularly preferred embodiment, a pair of X-ray intensifying screens is made by dispersing $YTaO_4$ phosphor made as described above, in a mixture of acrylic resins using a solvent.

This mixture is then coated on a polyethylene terephthalate support containing a small amount of anatase $TiO_2$ whitener dispersed therein. The phosphor may be coated to a coating weight of 15 to 120 mg of phosphor per $cm^2$. A topcoat of styrene/acrylonitrile copolymer is coated thereon and dried. The film element is a double side coated, gelatino silver halide element conventionally prepared as is well-known to those of normal skill in the art, preferably a tabular emulsion containing a small amount of a blue sensitizing dye therein. This emulsion will also have been raised to its optimum level of sensitivity by the addition of gold and sulfur as well as by the addition of antifoggants and the like. Wetting and coating agents will also be present. Coating weights (total of both sides) may be between 80 and 150 mg of silver/$dm^2$, for example.

In the practice of this invention, the double-side coated, gelatino silver halide element is placed in a conventional cassette between a pair of the X-ray intensifying screens described above. This element is then placed in proximity to the object which is to be examined, e.g., a human patient. X-rays are generated from a source, pass through the object, and are absorbed by the intensifying screens. UV light given off as a result of X-ray absorption, will expose the film element contained therein. A high quality image which has high detail, low noise and low print-through can thus be obtained. This reduction in print-through is of particular advantage. Print-through, as previously described in the art,

EP 0 592 616 B1

is a continual problem in the field of radiology and numerous attempts have been made to produce elements with lower print-through since the radiological information obtainable will be higher. Because silver halides naturally absorb UV light strongly, very little of the light emitted by each screen penetrates to the back of the emulsions on either side of the film support, i.e., to the sides of the photographic emulsions which abut on the base. This leaves a very small fraction of the light which could potentially be transmitted through the base as print-through light, but, since most film supports, particularly polyethylene terephthalate supports, absorb UV light, print-through is reduced even further. This differs from known methods of reducing print-through by placing a dye layer under the photographic emulsions on either side of the film base in that, no dye layer is required and in that a larger fraction of the actinic light emitted by screen contributed to image formation in the film rather than being uselessly absorbed by a dye.

This invention will now be illustrated by the following specific examples in which Example 1 is considered to represent the best mode thereof. All parts and percentages are by weight unless otherwise indicated.

EXAMPLE 1

An X-ray intensifying screen structure was made using the following procedures:

A. The Binder Solution:

The following ingredients were prepared:

| Ingredient | Amount (g) |
|---|---|
| n-Butyl acetate | 43.13 |
| n-Propanol | 34.00 |
| Carboset® 525[1] | 10.00 |
| Carboset® 526[2] | 10.00 |
| Polymeric organic silicone fluid | 0.07 |
| Zelec® 2457E[3] | 0.40 |
| Aerosol® OT-100[4] | 0.40 |
| Pluronic® 31R1[5] | 2.00 |

(1) Acrylic resin; ave. mol. wt. 260,000; acid no. 76-85; B. F. Goodrich Co., Cleveland, OH

(2) Acrylic resin; ave. mol. wt. 200,000; acid no. 100; B. F. Goodrich Co., Cleveland, OH

(3) Anionic antistatic agent of mixed mono and dialkyl phosphates of the general structure $R_2HPO_4$, where R is C8 to C10 alkyl; E. I. du Pont de Nemours & Co., Wilmington, DE

(4) Sodium dioctyl sulfosuccinate per U.S. 2,441,341

(5) Ethylene oxide/propylene oxide block copolymer; ave. mol. wt. 3,200; BASF Wyandotte; Wyandotte, MI

B. The X-ray Phosphor:

The following ingredients were thoroughly mixed in a paint shaker for 2 hours before charging to an alumina crucible:

| Ingredient | Amount (g) |
|---|---|
| $Y_2O_3$ | 101.46 |
| $Ta_2O_5$ | 198.54 |
| $Li_2SO_4$ | 150.00 |

The crucible was then placed in a standard, commercial, high temperature furnace and fired at 1200°C for 8 hours and then at 1250°C for 16 hours. The furnace was then allowed to cool and the contents of the crucible weighed and washed thoroughly with water to remove the flux. This material was then added to the binder Solution A using 200 g of phosphor/60 g of binder solution. This mixture was placed in a plastic container along with 85 g of 1 cm diameter corundum balls (ca. 15 balls) and this mixture was then ball milled for 12 to 16 hours at room temperature with a rotation speed of 60 rpm. After this step, the ball milled suspension was filtered through a 0.194 mm (75 mesh) Nylon® bag and coated onto a suitable support.

The support used was 0.25 mm (0.010 inch) thick, dimensionally stable polyethylene terephthalate film containing a small amount of a whitener, e.g., anatase $TiO_2$, dispersed therein.

This whitener will give the support some opacity to visible light, e.g., optical density of ca. > 1.7. The coating weight of the phosphor dispersion placed thereon is in the range from 20 to 100 mg of phosphor per $cm^2$.

C. The Overcoat Layer:

An overcoat layer is prepared from the following solutions:

| 1) | Ingredient | Amount (g) |
|---|---|---|
| | Acetone | 67.00 |
| | Methanol | 9.00 |
| | n-Butyl acetate | 4.80 |
| | Tyril® 100 [1] | 12.70 |
| | Carboset® XL-27[2] | 9.00 |

[1] Styrene/acrylonitrile copolymer resin; Dow Chemical Co., Midland, MI

[2] Acrylic resin; ave. mol. wt. 30,000; acid no. 80, B. F. Goodrich Co., Cleveland, OH

A gel solution is prepared by mixing the following ingredients until a thick gel forms:

| 2) | Ingredient | Amount (g) |
|---|---|---|
| | Methanol | 14.70 |
| | Triamylamine | 0.20 |
| | Carbopol® 1342 (1) | 0.132 |

(1) Acrylic resin thickener; B. F. Goodrich Co., Cleveland, OH

This solution is filtered and a mixture is prepared as follows:

| 3) | Ingredient | Amount (g) |
|---|---|---|
| | Solution 1 | 50.00 |
| | Gel Solution 2 | 12.19 |

This mixture is coated on top of the phosphor coating using a doctor knife with a 0.102 mm (0.004 inch) gap. The resulting top-coat is air dried for 12-16 hours at 40°C.

The structure thus obtained is represented by FIG. 1.

In this structure, 1 is the polyethylene terephthalate support containing small amounts of anatase $TiO_2$ dispersed therein, 2 represents the phosphor coating described above, and 3 the overcoat or protective layer applied supra thereto.

D. The Film Element:

A conventional, tabular grain, blue sensitive X-ray emulsion was prepared as well-known to one of normal skill in the art. This emulsion had tabular silver iodo bromide grains. After precipitation of the grains, the average aspect ratio was determined to be 5:1 and the thickness 0.2 μm. The procedures for making tabular grains of this nature are fully described in Nottorf, U.S. 4,772,886 and Ellis, U.S. 4,801,522.

These grains were dispersed in photographic grade gelatin ( 117 grams gelatin/mole of silver iodo bromide) and a suspension of 200 mg of 5-(3-methyl-2-benzothiazolinylidene)-3-carboxy-methylrohdanine sensitizing dye dissolved in 25 ml of methanol added to achieve 133 mg of dye per mole of silver halide. At this point, the emulsion was brought to its optimum sensitivity with gold and sulfur salts as is well-known to those skilled in the art. The emulsion was then stabilized by the addition of 4-hydroxy-6-methyl-1,3,3a,7-tetraazaindene and 1-phenyl-5-mercaptotetrazole. The usual wetting agents, antifoggants, coating aides and hardeners were added and this emulsion was then coated on a dimensionally stable, 0.178 mm (7 mil) polyethylene terephthalate film support which had first been coated with a conventional resin-sub followed by a thin substratum of hardened gelatin applied supra thereto. These subbing layers were present on both sides of the support. The emulsion was coated on each side at 2 $g/m^2$. A thin abrasion layer of hardened gelatin was applied over each of the emulsion layers. After drying, samples of this film were used with pairs of X-ray intensifying screens as further described herein.

E. Film/Screen Exposure & Results:

Pairs of screens were used to expose X-ray film elements. In this example, a control, consisting of phosphor screens made from $YTaO_4$:Tm, was used along with a pair of screens of this invention made according to the description above. The screens were placed in a vacuum bag along with the double side coated X-ray film element and given an exposure to a 60 KVP X-ray source with a tungsten cathode. After exposure, the films were developed in a standard X-ray developer formulation, fixed, washed and dried. The following results were obtained:

Table 1

| Sample | Coating Weight (mg/cm$^2$) | Speed | Sharpness[1] |
|---|---|---|---|
| Control | 25 | 100 | 0.391 |
| Of This Invention | 20.2 | 97 | 0.611 |

(1) MTF at 4 line pairs/mm

Thus, at almost equivalent speed, the elements of this invention produced a 50% increase in sharpness. Additionally, it was possible to achieve better results at a lower phosphor coating weight. This increase in sharpness occurs because print-through was considerably reduced compared to the control.

EXAMPLES 2-4

In these examples, several additional X-ray intensifying phosphors within the metes and bounds of this invention were tested. Screens were prepared in a manner similar to that described in Example 1 and each set of screens was used with the film described therein. Exposure and processing was also as described. The following results were obtained:

Table 2

| Example | Phosphor | Emission | Speed | Sharpness |
|---|---|---|---|---|
| Control | $YTaO_4$:Tm | uv + vis. | 100 | Poor |
| 2 | $YTaO_4$ | uv | 98 | Excellent |
| 3 | $YTaO_4$:Gd | uv | 95 | " |
| 4 | LaOBr:Gd | uv | 75 | " |

EXAMPLE 5

Commercial Preparation of Phosphor:

In this experiment a mixture comprising 66.2% tantalum oxide and 33.8% yttrium oxide (by weight) was fired up to 24 hours in a high temperature box furnace in the presence of an alkaline earth halide flux. After firing at 1200-1300°C for 24 hours, this material was removed and deagglomerated and the phosphor washed with water to remove the flux and associated impurities. Samples of this phosphor were made into an X-ray screen as described in Example 1 and and illustrated in Fig. 1. The results are summarized in Tables 3 and 4. The phosphor layer in this experiment contained ca. 93.7% phosphor, ca. 5.6% binder and ca. 0.5% of a plasticizer (Pluronic® 31R1). Several screens were made and small amounts of a UV absorber (Sanduvor ALB) added to some of the screens in order to control speed within the desired range. Samples of X-ray film (see Example 1) were then used with these screens to test the efficacy of these systems with the following results:

EP 0 592 616 B1

## Table 3

| Sample | UV Absorber Added (ppm) | C.W.[3] (mg/cm$^2$) | Rel. Speed | Sharpness[1] |
|---|---|---|---|---|
| Control 1 | None | 25 | 100 | .382 |
| Of-this-Invention | 75 | 28.5 | 105 | .467 |

## Table 4

| Sample | UV Absorber Added (ppm) | C.W.[3] (mg/cm$^2$) | Rel. Speed | Sharpness[2] |
|---|---|---|---|---|
| Control 2 | None | 57.4 | 100 | .365 |
| Of-this-Invention | " | 58.9 | 104 | .577 |
| " | 11 | 86.2 | 103 | .523 |

--------------------------------

(1)    MTF at 4 line pairs/mm

(2)    MTF at 2 line pairs/mm

(3)    Single screen coating weight; identical front and back screens

## Claims

1. A radiographic system comprising a pair of X-ray intensifying screens in contact with a double-side coated silver halide element, said silver halide comprising silver halide grains wherein at least 50 % of said grains are tabular silver halide grains with a thickness of less than 0.5 µm and an average aspect ratio of greater than 2:1, and wherein said X-ray intensifying screens comprise a support bearing a phosphor layer thereon, said layer comprising phosphor dispersed in a binder with the proviso that said phosphor, when absorbing X-radiation has a peak emission between 300 and 390 nm, does not emit more than 20 % of its light below 300 nm or above 390 nm, and said binder absorbs less than 10 % of any ultra-violet light emitted therefrom; and wherein said double-side coated silver halide element comprises a Dmax(vis) defined as the maximum density obtainable on said double-side coated silver halide element when exposed to visible light and a Dmax(UV) defined as the maximum density obtainable on said double-side coated silver halide element when exposed to UV light and

$$\frac{\text{Dmax (vis) - Dmax (UV)}}{\text{Dmax (vis)}} = \text{to or} < \text{than } 0.10.$$

2. The system of claim 1 wherein said phosphor has a peak emission between 310 and 360 nm and said binder absorbs less than 10 % of any ultra-violet light emitted therefrom.

3. The system of claim 1 wherein said silver halide is a tabular, gelatino silver halide emulsion with an average grain thickness of between 0.21 and 0.30 µm and said aspect ratio is between 4.0 and 5.5:1.

4. The system of claim 1 wherein said phosphor is selected from yttrium tantalate, yttrium tantalate activated with gadolinium, and lanthanum oxybromide activated with gadolinium.

8

**5.** The system of claim 1 wherein said phosphor is $YTaO_4$ and said binder is a mixture of acrylic resins with an average molecular weight of 100,000 to 300,000.

**6.** The system of claim 1 wherein said tabular silver halide grain is taken from the group consisting of silver bromide, silver chloride, silver iodide or mixtures thereof.

**7.** The system of claim 1 or 4 wherein said silver halide further comprises silver halide grains consisting of spherical silver chloride grains, wherein the silver chloride content of said spherical silver halide grains is at least 50 mole %.

**8.** A radiographic system comprising a pair of X-ray intensifying screens in contact with a double-side coated silver halide element, said silver halide comprising silver halide grains wherein said grains are consisting of spherical silver chloride grains wherein the silver chloride content is at least 50 mol % and wherein said X-ray intensifying screens comprise a support bearing a phosphor layer thereon, said layer comprising phosphor dispersed in a binder with the proviso that said phosphor, when absorbing X-radiation, has a peak emission between 300 and 390 nm, does not emit more than 20 % of its light below 300 nm or above 390 nm, and wherein said phosphor is selected from yttrium tantalate activated with gadolinium, and lanthanum oxybromide activated with gadolinium and said binder absorbs less than 10 % of any ultra-violet light emitted therefrom; and wherein said double-side coated silver halide element comprises a Dmax(vis) defined as the maximum density obtainable on said double-side coated silver halide element when exposed to visible light and a Dmax(UV) defined as the maximum density obtainable on said double-side coated silver halide element when exposed to UV light and

$$\frac{Dmax(vis) - Dmax(UV)}{Dmax(vis)} = \text{to or} < \text{than } 0.10.$$

**Patentansprüche**

**1.** Radiographisches System, umfassend ein Paar Röntgenstrahlenverstärkungsschirme im Kontakt mit einem doppelseitig beschichteten Silberhalogenid-Element, wobei das Silberhalogenid Silberhalogenidkörner umfaßt, worin wenigstens 50 % der Körner tafelförmige Silberhalogenidkörner einer Dicke von weniger als 0,5 $\mu$m und eines durchschnittlichen Aspektverhältnisses von größer als 2:1 sind, und worin die Röntgenstrahlenverstärkungsschirme einen Träger umfassen, der eine Leuchtstoffschicht trägt, die Schicht Leuchtstoff umfaßt, der in einem Bindemittel dispergiert ist, mit der Maßgabe, daß der Leuchtstoff bei der Röntgenstrahlenabsorption eine Spitzenemission zwischen 300 und 390 nm aufweist, nicht mehr als 20 % seines Lichts unterhalb 300 nm oder oberhalb von 390 nm emittiert, und das Bindemittel weniger als 10 % jedes Ultraviolettlichts absorbiert, das aus demselben emittiert wird; und worin das doppelseitig beschichtete Silberhalogenid-Element ein $D_{max}$ (vis) umfaßt, das als die maximale Dichte definiert ist, die auf dem doppelseitig beschichteten Silberhalogenid-Element erhältlich ist, wenn sichtbares Licht auf dasselbe einwirkt, und ein $D_{max}$(UV) umfaßt, das als die maximale Dichte definiert ist, die auf dem doppelseitig beschichteten Silberhalogenid-Element erhältlich ist, wenn UV-Licht auf dasselbe einwirkt, und

$$\frac{D_{max}(vis) - D_{max}(UV)}{D_{max}(vis)} = \text{bis zu oder} < \text{als } 0{,}10$$

ist.

**2.** System gemäß Anspruch 1, worin der Leuchtstoff eine Spitzenemission zwischen 310 und 360 nm aufweist, und das Bindemittel weniger als 10 % jedes UV-Lichts absorbiert, das aus demselben emittiert wird.

**3.** System gemäß Anspruch 1, worin das Silberhalogenid eine tafelförmige, Gelatine-Silberhalogenid-Emulsion einer durchschnittlichen Korndicke zwischen 0,21 und 0,30 $\mu$m ist, und das Aspektverhältnis zwischen 4,0 und 5,5:1 liegt.

**4.** System gemäß Anspruch 1, worin der Leuchtstoff aus Yttriumtantalat, mit Gadolinium aktiviertem Yttriumtantalat und mit Gadolinium aktiviertem Lanthanoxibromid ausgewählt ist.

**5.** System gemäß Anspruch 1, worin der Leuchtstoff $YTaO_4$ ist, und das Bindemittel eine Mischung von Acrylharzen einer durchschnittlichen Molmasse von 100 000 bis 300 000 ist.

**6.** System gemäß Anspruch 1, worin das tafelförmige Silberhalogenidkorn aus der Gruppe ausgewählt wird, die aus Silberbromid, Silberchlorid, Silberiodid oder Mischungen derselben besteht.

**7.** System gemäß Anspruch 1 oder Anspruch 4, worin das Silberhalogenid weiterhin Silberhalogenidkörner umfaßt, die aus kugeligen Silberchlorid-Körnern bestehen, worin der Silberchlorid-Gehalt der kugeligen Silberchlorid-Körner wenigstens 50 Mol-% beträgt.

**8.** Radiographisches System, umfassend ein Paar Röntgenstrahlenverstärkungsschirme im Kontakt mit einem doppelseitig beschichteten Silberhalogenid-Element, wobei das Silberhalogenid Silberhalogenidkörner umfaßt, worin die Körner aus kugeligen Silberchloridkörnern bestehen, worin der Silberchlorid-Gehalt wenigstens 50 Mol-% beträgt, und worin die Röntgenstrahlenverstärkungsschirme einen Träger umfassen, der eine Leuchtstoffschicht trägt, die Schicht Leuchtstoff umfaßt, der in einem Bindemittel dispergiert ist, mit der Maßgabe, daß der Leuchtstoff bei der Röntgenstrahlenabsorption eine Spitzenemission zwischen 300 und 390 nm aufweist, nicht mehr als 20 % seines Lichts unterhalb 300 nm oder oberhalb von 390 nm emittiert, und worin der Leuchtstoff aus mit Gadolinium aktiviertem Yttriumtantalat und mit Gadolinium aktiviertem Lanthanoxibromid ausgewählt ist, und das Bindemittel weniger als 10 % jedes Ultraviolettlichts absorbiert, das aus demselben emittiert wird; und worin das doppelseitig beschichtete Silberhalogenid-Element ein $D_{max}(vis)$ umfaßt, das als die maximale Dichte definiert ist, die auf dem doppelseitig beschichteten Silberhalogenid-Element erhältlich ist, wenn sichtbares Licht auf dasselbe einwirkt, und ein $D_{max}(UV)$ umfaßt, das als die maximale Dichte definiert ist, die auf dem doppelseitig beschichteten Silberhalogenid-Element erhältlich ist, wenn UV-Licht auf dasselbe einwirkt, und

$$\frac{D_{max}\ (vis)\ -\ D_{max}\ (UV)}{D_{max}(vis)} = \text{bis zu oder} < \text{als } 0{,}10$$

ist.

## Revendications

**1.** Un système radiographique comprenant une paire d'écrans d'intensification des rayons-X au contact d'un élément d'halogénure d'argent revêtu double-face, ledit halogénure d'argent comprenant des grains d'halogénure d'argent dans lesquels au moins 50% desdits grains sont des grains d'halogénure d'argent tabulaires d'une épaisseur inférieure à 0,5 μm et leur format de projection moyen étant supérieur à 2:1, et dans lequel lesdits écrans d'intensification de rayons X comprennent un support muni d'une couchede produit fluorescent, ladite couche comprenant le produit fluorescent dispersé dans un liant sous réserve que ledit agent fluorescent, lors d'une absorption de rayons X présente un pic d'émission compris entre 300 et 390 nm, qu'il n'émette pas plus de 20% de sa lumière en dessous de 300 nm ou au-dessus de 390 nm, et que ledit liant absorbe moins de 10% de toute lumière ultraviolette émise par celui-ci; et dans lequel ledit élément d'halogénure d'argent revêtu double-face comprend une Dmax (vis) définie comme la densité maximum pouvant être obtenue sur ledit élément d'halogénure d'argent revêtu double-face lorsqu'il est exposé à une lumière visible et une Dmax (UV) définie comme étant la densité maximum pouvant être obtenue sur ledit élément d'halogénure d'argent revêtu double-face lorsqu'il est exposé à une lumière UV et

$$\frac{\text{Dmax (vis)} - \text{Dmax (UV)}}{\text{Dmax (vis)}} \leq 0{,}10.$$

**2.** Le système selon la revendication 1, dans lequel ledit agent fluorescent présente un pic d'émission compris entre 310 et 360 nm et ledit liant absorbe moins de 10% de toute lumière ultraviolette émise par celui-ci.

**3.** Le système selon la revendication 1, dans lequel ledit halogénure d'argent est une émulsion tabulaire d'halogénure d'argent gélatineux d'une épaisseur de grain moyenne comprise entre 0,21 et 0,30 μm ledit format de projection étant compris entre 4,0 et 5,5:1.

**4.** Le système selon la revendication 1 dans lequel ledit agent fluorescent est choisi parmi tantalate d'yttrium, tantalate d'yttrium activé au gadolinium et oxybromure de lanthane activé au gadolinium.

**5.** Le système selon la revendication 1, dans lequel ledit agent fluorescent est $YTaO_4$ et ledit liant est un mélange de résines acryliques d'un poids moléculaire moyen de 100 000 à 300 000.

**6.** Le système selon la revendication 1, dans lequel ledit grain tabulaire d'halogénure d'argent est pris dans le groupe constitué par bromure d'argent, chlorure d'argent, iodure d'argent ou leurs mélanges.

**7.** Le système selon la revendication 1 ou 4, dans lequel ledit halogénure d'argent comprend en outre des grains d'halogénure d'argent constitués de grains sphériques de chlorure d'argent, dans lequel la teneur en chlorure d'argent desdits grains sphériques d'halogénure d'argent est au moins égale à 50 en moles %.

**8.** Un système radiographique comprenant une paire d'écrans d'intensification de rayons X au contact d'un élément d'halogénure d'argent revêtu double-face, ledit halogénure d'argent comprenant des grains d'halogénure d'argent dans lesquels lesdits grains sont constitués de grains sphériques de chlorure d'argent, dans lesquels la teneur en chlorure d'argent est au moins égale à 50% en moles et dans lesquels lesdits écrans d'intensification des rayons X comprennent un support muni d'une couche de produit fluorescent, ladite couche comprenant des produits fluorescents dispersés dans un liant sous réserve que lesdits produits fluorescents, lorsqu'ils absorbent des rayons X, donnent un pic d'émission compris entre 300 et 390 nm, n'émettent pas plus de 20% de leur lumière en dessous de 300 nm ou au-dessus de 390 nm et dans lesquels ledit agent fluorescent est choisi parmi le tantalate d'yttrium activé au gadolinium et l'oxybromure de lanthane activé au gadolinium, et ledit liant absorbe moins de 10% de toute lumière ultraviolette émise à partir de celui-ci ; et dans lequel ledit élément d'halogénure d'argent revêtu double-face comprend une Dmax(vis) définie comme étant la densité maximum pouvant être obtenue sur un élément d'halogénure d'argent revêtu double face lorsqu'il est exposé à la lumière visible et une Dmax (UV) définie comme étant la densité maximum pouvant être obtenue sur ledit élément d'halogénure d'argent revêtu double face lorsqu'il est exposé à une lumière UV et

$$\frac{\text{Dmax(vis) - Dmax (UV)}}{\text{D max(vis)}} \leq 0,10$$

# FIG.1